# EUROPEAN PATENT SPECIFICATION

(11) **EP 1 838 790 B1**
(45) Date of publication and mention of the grant of the patent: **12.11.2008**
(21) Application number: 05854991.6
(22) Date of filing: 16.12.2005
(51) Int. Cl.: C09D 5/03

(54) **PROCESS FOR THE PREPARATION OF POWDER COATINGS**
VERFAHREN ZUR HERSTELLUNG VON PULVERLACKEN
PROCEDE DE PREPARATION DE REVETEMENTS EN POUDRE

(30) Priority: 20.12.2004 US 637651 P
(43) Date of publication of application: 03.10.2007
(73) Proprietor: E.I. DU PONT DE NEMOURS AND COMPANY, Wilmington, DE 19898 (US)
(72) Inventor: DECKER, Owen, H., Houston, Texas 77065 (US); WULF, Martin, 40764 Langenfeld (DE); WILKENHOENER, Uwe, 42107 Wuppertal (DE)
(74) Representative: Biering, Christine
(86) International application number: PCT/US2005/046359
(87) International publication number: WO 2006/069152

(56) References cited:
- EP-A- 0 947 254

## Description

### Field of the Invention

The invention relates to a process of preparation of powder coating compositions with different gloss effects of the coatings on different substrates.

### Description of Related Art

Powder coatings, which can be cured by ultraviolet (UV) light, have been under development for many years. Typically, these compositions contain a binder resin with ethylenically unsaturated groups and a specific photo initiator to initiate the photo-polymerization. This renders it possible to cure such compositions in a very short time and to improve quality and productivity with low operating and equipment costs.

The use of matting agents to adjust the gloss to the desired level, such as, waxes, silica, glass pearls, and crystalline resins as well as the use of dry-blends of chemically incompatible powders or the use of different process conditions, such as, different curing conditions, are often difficult to control or are inefficient or often lead to coatings with a loss in technological properties.

U. S. Application 2005-0276917 relates to a process for the preparation of powder coatings with desired gloss levels wherein the applied and uncured powder coating composition is irradiated with high energy radiation before melting the powder particles and curing the coating.

EP-A 0 947 254 discloses a method of producing a coating having a low gloss appearance from an UV curable powder coating using crystalline resins.

### Summary of the Invention

The invention relates to a process of preparation of powder coating compositions providing a gloss level of the coatings comprising the following steps of
a) providing particles of at least one powder coating composition having a number average particle size in the range of 1 to 300 µm, and
b) mixing these particles with particles of at least one powder coating composition having a number average particle size in the range of 1 to 300 µm, the particles of which are irradiated with high energy radiation under temperature below the glass transition temperature of the coating composition, in a mixing ratio of 1 : 99 to 99 : 1.

The process according to the invention provides powder coating compositions producing a desired gloss level of the coatings by varying the time period and/or the intensity of the high energy irradiation of the powder coating particles or by varying the mixing ratio between the non-irradiated powder particles and the irradiated powder particles. No change of the powder coating composition, such as, the addition of specific components, such as, e.g., gloss control agents is necessary to achieve the desired gloss level. Hence, the technological properties of the cured coating, such as, abrasion, scratch and scuff resistance, leveling, outdoor stability, chemical resistance and hardness remain at the original level.

### Detailed Description of the Invention

The features and advantages of the present invention will be more readily understood, by those of ordinary skill in the art, from reading the following detailed description. It is to be appreciated those certain features of the invention, which are, for clarity, described above and below in the context of separate embodiments, may also be provided in combination in a single embodiment. Conversely, various features of the invention that are, for brevity, described in the context of a single embodiment, may also be provided separately or in any sub-combination. In addition, references in the singular may also include the plural (for example, "a" and "an" may refer to one, or one or more) unless the context specifically states otherwise.

The use of numerical values in the various ranges specified in this application, unless expressly indicated otherwise, are stated as approximations. In this manner, slight variations above and below the stated ranges can be used to achieve substantially the same results as values within the ranges. Also, the disclosure of these ranges is intended as a continuous range including every value between the minimum and maximum values.

The present invention is based upon the process wherein the level of gloss of a powder coating can be varied by addition of powder coating particles which are irradiated with high energy radiation under near-ambient temperature to powder coating particles which are not irradiated with high energy radiation.

The variation of the gloss level can be achieved using powder coating particles irradiated by varying the conditions of irradiation of the powder particles.

The gloss of finishes by using powder mixtures according to this invention is measured at 60° according to DIN 67 530 and can be adjusted in the range of, e.g., 5 to 90 by using the process. Typically, a matt finish has a gloss in the range of 1 to 20, a high gloss finish has a gloss in the range of 60 to 95, and a semi-gloss or lower gloss finish in the range of 20 to 40.

The particles of at least one powder coating composition are provided as mentioned in step a) according to the invention. The mixing with the irradiated particles of at least one powder coating composition can be achieved by intimately mixing of the particles in mixing devices, such as, e.g., mixing mills, batch mixers, revolving mixers, other comprehensive mixing machinery.

To achieve different gloss levels as desired, it is possible according to the invention to vary the time period and/or the intensity of the high energy irradiation of the irradiated powder coating particles or to vary the mixing ratio between the non-irradiated powder particles and the irradiated powder particles.

The dose of the high-energy radiation, which is referred to as the time integral of irradiance as well as the intensity of the high-energy irradiation, is an important parameter that affects especially the irradiating efficiency. The dose can be varied from low to high dose. In this way, in principle, lower gloss powder coatings according to the invention are achieved by mixing the particles of step a) with irradiated particles irradiated with a higher dose whereas higher gloss powder coatings are obtained by mixing the particles of step a) with irradiated particles irradiated with a lower dose, for a given mixing ratio between the non-irradiated powder particles and the irradiated powder particles.

The irradiated particles are preferably irradiated with UV-radiation in one or more irradiation cycles. UV (ultraviolet) -radiation or electron beam radiation may be used as high-energy radiation. UV-radiation is preferred. Irradiation may proceed continuously or discontinuously, that means in cycles.

Useful doses of the high-energy radiation according to the invention are in the range, relating to UV radiation, of e.g., 20 to 1000 mJ/cm², preferably, 50 to 800 mJ/cm², per one irradiation cycle. The total UV dose is in the range of 20 to 5000 mJ/cm².

Different gloss levels as desired according to the invention can be achieved also by varying the mixing ratio between the non-irradiated powder particles of step a) and the irradiated powder particles, for a given dose of the high-energy radiation relating to the irradiated particles.

The mixing ratio can preferably vary in the range of from 1 : 99 to 99 : 1, more preferably of 5 : 95 to 95 : 5. In this way, in principle, lower gloss powder coatings according to the invention are achieved by mixing the non-irradiated particles of step a) with irradiated particles in a range of e.g. 1: 99 to 25 : 75; whereas, higher gloss powder coatings are obtained by mixing the non-irradiated particles with irradiated particles in the range of, e.g., 99 : 1 to 75 : 25.

It is important for the process of irradiating the powder coating particles to select a technique for the irradiation wherein the individual particles of the powder coating composition are able to be involved in the irradiation with high energy radiation. The generic process arrangement applicable for this process has to fulfill the following process functions in principle: a powder feed dose a UV irradiation source capable of irradiating the powder and a collector for the irradiated powder particles. Additionally, it is possible to combine the powder irradiation process arrangement with a thermo-regulating system.

Other principle examples appropriate for the powder particle irradiation include a UV fluidized bed hopper, a UV reactor with the stirrer, or a UV loop-type reactor.

The irradiation with high-energy radiation is carried out under near-ambient temperature, that means, temperatures below the glass transition temperature of the coating composition, e.g., in the range of 0 to 60°C, preferable, 15 to 30°C.

In principle, the duration of irradiation distance from the object and/or radiation output of the UV-radiation emitter may be varied during UV irradiation. The preferred source of radiation comprises UV-radiation sources emitting in the wavelength range from 180 to 420 nm, in particular, from 200 to 400 nm. Examples of such UV-radiation sources are optionally doped high, medium and low pressure mercury vapor emitters and gas discharged tubes, such as, for example, low pressure xenon lamps. Apart from these continuously operating UV-radiation sources, however, it is also possible to use discontinuous UV-radiation sources. These are preferably so-called high-energy flash devices (UV-flash lamps for short). The UV-flash lamps may contain a plurality of flash tubes, for example, quartz tubes filled with inert gas, such as xenon.

The distance between the UV-radiation sources and the powder coating particles to be irradiated according to the invention may be, for example, 0.5 to 300 cm.

Irradiation with UV-radiation may proceed in one or more irradiation cycles. In other words, the energy to be applied by irradiation may be supplied completely in a single irradiation cycle or in portions in two or more irradiation cycles.

The irradiation time with UV radiation may be, for example, in the range from 1 millisecond to 300 seconds, preferably, from 0.1 to 60 seconds, for each cycle, depending on the number of flash discharges selected. If continuous, UV-radiation sources are used; the irradiation time may be for example in the range from 0.5 seconds to 30 minutes, preferably, less than 2 minutes.

Following the irradiation with high energy the irradiated powder coating particles are suitable for mixing with the non-irradiated powder particles of step a) according to the invention.

After this mixing the resulted powder coating composition is suitable for application onto a substrate or for storage.

With regard to the application to a substrate the resulted powder coating composition of this invention may be applied by electrostatic spraying or fluidized bed coating method, all of which are known to those skilled in the art. The coatings may be applied to metallic and/or non-metallic substrates or as a coating layer in a multi-layer film build.

The coatings according to the invention may be applied in a dry film thickness in a range of, e.g., 30 to 200 micrometers (µm) for each coating layer.

Then the applied powder coating particles of the resulted powder coating composition are fused, molten and flowed out by increased temperature. This can be done, e.g., by IR-radiation, IR-radiation combined with hot-air convection, or hot-air convection. IR radiation includes also Near-Infrared radiation (NIR). Typically IR radiation uses wavelengths in the range of 0.76 µm to 1mm and NIR radiation used wavelengths in the range of 0.76 to 1.2 µm. The melting temperature, for example, may be in the range of 60 to 250°C, measured as substrate surface temperature.

The molten powder coating is then finally cured. This can be done by high-energy radiation with a UV dose in a range of 100 to 5000 mJ/cm². It is also possible to achieve curing throughout an exposure of the applied and molten powder coating layer to thermal energy. The coating layer may, for example, be exposed to a convective and/or radiant heating at temperatures of approximately 60 to 250°C, preferably, of 80 to 160°C, measured as substrate surface temperature.

Both, the powder coating composition having non-irradiated powder particles and the powder coating composition having the irradiated powder particles are compositions suitable for powder coating and known by the skilled person.

Suitable powder coating binders with ethylenically unsaturated groups are, for example, any powder coating binder known to the skilled person which can be cross-linked by free-radical polymerization. These powder coating binders can be pre-polymers, such as, polymers and oligomers, containing, per molecule, one or more, free-radically polymerizable olefinic double bonds.

Examples of powder coating binders curable by free-radical polymerization include those based on epoxy, polyester, acrylic and/or urethane resins. Examples of such photopolymerizable resins include unsaturated polyesters, unsaturated (meth)acrylates, unsaturated polyester-urethanes, unsaturated (meth)acrylic-urethanes, epoxies, acrylated epoxies, epoxy-polyesters, polyester-acrylics, epoxy-acrylics.

(Meth)acrylic is respectively intended to mean acrylic and/or methacrylic.

In addition to the resins, the powder coating compositions of this invention may contain additives that are conventionally used in powder coating compositions. Examples of such additives include fillers, extenders, flow additives, photo initiators, catalysts, hardeners, dyes and pigments. Compounds having anti-microbial activity may also be added to the powder coating compositions.

The powder coating compositions may contain photo initiators in order to initiate the free-radical polymerization. Suitable photo initiators include, for example, those which absorb in the wavelength range from 190 to 600 nm. Examples for photo initiators for free-radically curing systems are benzoin and derivatives, acetophenone and derivatives, benzophenone and derivatives, thioxanthone and derivatives, anthraquinone, organo phosphorus compounds, such as, for example, acyl phosphine oxides.

The photo initiators are used, for example, in quantities of 0.1 to 7 weight-%, relative to the total of resin solids and photo initiators. The photo initiators may be used individually or in combination.

The powder coating compositions may comprise pigmented or unpigmented powder coating agents for producing any desired coating layer of a mono-layer coating or a multilayer coating. The compositions may contain transparent, color-imparting and/or special effect-imparting pigments and/or extenders. Suitable color-imparting pigments are any conventional coating pigments of an organic or inorganic nature. Examples of inorganic or organic color-imparting pigments are titanium dioxide, micronized titanium dioxide, carbon black, azo pigments, and phthalocyanine pigments. Examples of special effect-imparting pigments are metal pigments, for example, made from aluminum, copper or other metals, interference pigments, such as metal oxide coated metal pigments and coated mica. It is possible to use different pigmented powder coating compositions as described in U.S. 6,743,379 according to the invention. Examples of usable extenders are silicon dioxide, aluminum silicate, barium sulfate, and calcium carbonate.

The additives are used in conventional amounts known to the person skilled in the art.

The powder coating composition may contain also further binder resins, such as thermosetting resins, such as, in amounts of, e.g., 0 to 90 wt%, relative to the total resin solids, to make dual curing possible if desired. Such resins may be, for example, epoxy, polyester, (meth)acrylic and/or urethane resins.

The powder coating compositions are prepared by conventional manufacturing techniques used in the powder coating industry and known to the skilled person. For example, the ingredients used in the powder coating composition, can be blended together and heated to a temperature to melt the mixture and then the mixture is extruded. The extruded material is then cooled on chill roles, broken up and then ground to a fine powder, which can be classified to the desired grain size.

The average particle size is in the range of 1 to 300 µm, preferably of 20 to 200 µm.

A substrate is preferably coated with the powder coating composition.

In certain applications, the substrate to be coated may be preheated before the application of the powder, and then either heated after the application of the powder or not. For example, gas is commonly used for various heating steps, but other methods, e.g., microwaves, IR or NIR are also known. Also a primer can be applied, which seals the surface and provides the required electrical conductivity. UV-curable primers are also available.

Substrates, which may be considered, are metal, wooden substrates, wood fiber material, paper or plastic parts, for example, also fiber reinforced plastic parts, for example, automotive and industrial bodies or body parts.

The process according to the invention provides coatings, which have a rough or textured surface microscopically which is seen as low gloss, but otherwise appears smooth to the naked eye.

The present invention is further defined in the following Examples. It should be understood that these Examples are given by way of illustration only.

All parts and percentages are on a weight basis unless otherwise indicated.

### Examples

### Example 1

### Non-Irradiated UV Powder Coating Compositions

1.1 A clearcoat composition is formulated by dry-mixing of 97 wt% of Uvecoat^{®} 1000 (UCB Surface Specialties), an unsaturated polyester with methacrylate groups, 2 wt% of Irgacure^{®} 2959 (Ciba) as photoinitiator and 1 wt% of Powdermate^{®} EX-486 (Troy Chemical Company) as flow additive.
After mixing the components in the mixer, the coating composition was processed further by extrusion with a twin screw extruder at a temperature setting of the extruder of 110 to 120°C. After extruding, the molten composition was cooled down on a cooling belt and the resulted product was correspondingly crushed to the small chips. Afterwards, the chips were milled and sieved to an applicable particle size distribution typical for the electrostatic spraying, in a range of 5 to 120 µm.

1.2 A clearcoat composition is formulated by dry-mixing of 88.5 wt% of Uvecoat^{®} 1000 (UCB Surface Specialties), an unsaturated polyester with methacrylate groups, 0,5 wt% of Irgacure^{®} 2959 (Ciba) as photoinitiator, 0,5 wt% of Powdermate^{®} EX-486 (Troy Chemical Company) as flow additive, 3.5 wt% of silica Syloid^{®} Al-1 (Grace) and 7 wt% of a PE/PA wax Ceraflour 995 (BYK).

The formulation and manufacture are the same as mentioned above in the Example 1.1.

The powder was separately sprayed onto a metal plate coated with a black cationic electro-deposition primer, with an electrostatic spray gun, to a film thickness of 80 µm. The sprayed powder patterns were heated using the combination of IR and convection heat of 120°C for 10 min. Afterwards, the hot metal panels with molten powder coating were UV cured with the aid of medium-pressure Hg lamp (Fusion 240 W/cm emitters, with the max. intensive operational wavelength area of 200 to 390 nm), using different UV doses. The UV dose for the curing step should be adjusted so that the coating is fully cured; typically with a UV dose of 3000 mJ/cm².

### Example 2

### Irradiated UV Powder Coating Composition

Preparation of the irradiated powder coating was achieved using the same powder formulation as previously described in Example 1.1. For that the powder coating sample (100 g) was carefully charged in a powder sieve (150 µm mesh) equipped with the mechanical stirrer. After the stirrer was switched on the powder began to pour discontinuously through the sieve into a plastic can receiver positioned at the ground. The distance between the sieve and the receiver was setup at 100 cm. To irradiate the powder, the UV lamp was installed between the powder sieve and the receiver at the half distance (50 cm) between the sieve and the receiver. The distance between the UV lamp and the center of the passing powder (measured from the center of the sieve) was established at 12 cm. To provide safety the powder zone was separated from the UV source with an additionally installed quartz plate. Time required for the full work-up of the powder coating charge (100 gram) was fixed at 60 sec. Afterwards, the powder was collected in the receiver. In order to increase the dose of irradiation accumulated by the powder particles during the first irradiation cycle, the resulting powder was passed through the irradiation cycle once more. Afterwards, the powder was collected and stored until the further application in the dark cool place (>10°C).

The specific UV dose was calculated as a dose of UV irradiation accumulated during the 60 seconds of irradiation cycle and divided by 100 gram, in other words dose of irradiation per 1 gram of powder coating. The calculated total dose of the two cycles of irradiation is 650 mJ/cm².

### Example 3

### UV Powder Coating Composition According to the Invention

The powder coating samples formulated and processed as previously described in Example 1.1 and Example 2 were mixed in, the ratio of 25 : 75 respectively. The resulting powder was thoroughly mixed using the laboratory mixer and applied. The powders were sprayed onto a metal plate coated with a black cationic electro-deposition primer, with an electrostatic spray gun, to a film thickness of 80 µm. The sprayed powder was heated using the combination of IR and convection heat of 120°C for 10 min. Afterwards the hot metal panel with molten powder coating was UV cured with the aid of medium-pressure Hg lamp (Fusion 240 W/cm emitters, with the max. intensive operational wavelength area of 200 to 390 nm). The UV dose for the curing step should be adjusted so that the coating is fully cured; typically, with a UV dose of 3000 mJ/cm².

### Example 4

### Testing of the Coatings

**Table 1**

| **Examples** | **60° gloss (*)** | **Flexibility (Erichson) (**)** | **100 MEK double rubs (***)** | **Thickness µm** |
|---|---|---|---|---|
| Example 1.1 | 72 | >8 | 4 | 58 |
| Example 1.2 | 42.6 | >8 | 4 | 51 |
| Example 3 | 32.4 | >8 | 4 | 50 |

| | | | | |
|---|---|---|---|---|
| (*) measured in accordance with DIN 67 530 (***) measured in accordance with the DIN ES ISO 1520 (***) measured in accordance with ASTM D 4752 | | | | |

As it can be seen in Table 1, the mixed powder composition according to Example 3 gives a lower 60° gloss of the coating illustrating that the gloss level can be controlled using the process according to the invention. Technological properties of the coating, such as, flexibility and hardness are retained.

## Claims

1. A process of preparation of a powder coating composition providing a gloss level of the coating comprising the following steps of
a) providing particles of at least one powder coating composition having a number average particle size in the range of 1 to 300 µm, and
b) mixing these particles with particles of at least one powder coating composition having a number average particle size in the range of 1 to 300 µm, the particles of which are irradiated with high energy radiation under temperature below the glass transition temperature of the coating composition in a mixing ratio of 1 : 99 to 99 : 1.

2. The process according to claim 1 wherein the mixing ratio is of 5 :95 to 95: 5.

3. The process according to claim 1 wherein mixing the non-irradiated particles of step a) with irradiated particles in the range of 1: 99 to 25 to 75, for lower gloss powder coatings.

4. The process according to claim 1 wherein mixing the non-irradiated particles of step a) with irradiated particles in the range of 99 : 1 to 75 : 25, for higher gloss powder coatings.

5. The process according to claim 1 wherein the irradiated particles are irradiated with a UV dose in the range of 20 to 1000 mJ/cm² per irradiation cycle.

6. The process according to claim 1 wherein the irradiated particles are irradiated with UV-radiation in one or more irradiation cycles.

7. A substrate coated with a powder coating composition of the process according to claim 1.

## Patentansprüche

1. Verfahren zur Herstellung einer Pulverlack-Zusammensetzung, die eine Glanzstufe der Beschichtung liefert, mit den folgenden Schritten:
a) Bereitstellen von Teilchen mindestens einer Pulverlack-Zusammensetzung mit einer zahlengemittelten Teilchengröße im Bereich von 1 bis 300 µm, und
b) Vermischen dieser Teilchen mit Teilchen mindestens einer Pulverlack-Zusammensetzung mit einer zahlengemittelten Teilchengröße im Bereich von 1 bis 300 µm, deren Teilchen mit energiereicher Strahlung bestrahlt sind, bei einer Temperatur unter der Glasübergangstemperatur der Beschichtungszusammensetzung in einem Mischungsverhältnis von 1:99 bis 99:1.

2. Verfahren nach Anspruch 1, wobei das Mischungsverhältnis 5:95 bis 95:5 beträgt.

3. Verfahren nach Anspruch 1, wobei das Vermischen der unbestrahlten Teilchen von Schritt a) mit bestrahlten Teilchen für Pulverlacke mit niedrigerem Glanz im Bereich von 1:99 bis 25:75 erfolgt.

4. Verfahren nach Anspruch 1, wobei das Vermischen der unbestrahlten Teilchen von Schritt a) mit bestrahlten Teilchen für Pulverlacke mit höherem Glanz im Bereich von 99:1 bis 75:25 erfolgt.

5. Verfahren nach Anspruch 1, wobei die bestrahlten Teilchen mit einer UV-Dosis im Bereich von 20 bis 1000 mJ/cm² pro Bestrahlungszyklus bestrahlt werden.

6. Verfahren nach Anspruch 1, wobei die bestrahlten Teilchen mit UV-Strahlung in einem oder mehreren Bestrahlungszyklen bestrahlt werden.

7. Substrat, das mit einer Pulverlack-Zusammensetzung gemäß dem Verfahren nach Anspruch 1 beschichtet wird.

## Revendications

1. Procédé de préparation d'une composition de revêtement en poudre fournissant un niveau de brillant du revêtement comprenant les étapes de
a) fourniture de particules d'au moins une composition de revêtement en poudre ayant une taille de particule moyenne en nombre située dans la plage de 1 à 300 µm, et
b) mélange de ces particules avec les particules d'au moins une composition de revêtement en poudre ayant une taille de particule moyenne en nombre située dans la plage de 1 à 300 µm, dont les particules sont irradiées avec une irradiation de haute énergie sous une température située en dessous de la température de transition vitreuse de la composition de revêtement en un rapport de mélange de 1:99 jusqu'à 99:1.

2. Procédé selon la revendication 1, dans lequel le rapport de mélange est de 5:95 à 95:5.

3. Procédé selon la revendication 1, où le mélange des particules non irradiées de l'étape a) avec des particules irradiées dans la plage de 1:99 jusqu'à 25:75, pour des revêtements en poudre de brillant inférieur.

4. Procédé selon la revendication 1, où le mélange des particules non irradiées de l'étape a) avec des particules irradiées dans la plage de 99:1 jusqu'à 75:25, pour des revêtements en poudre de brillant supérieur.

5. Procédé selon la revendication 1, dans lequel les particules irradiées sont irradiées avec une dose d'UV située dans la plage de 20 à 1000 mJ/cm² par cycle d'irradiation.

6. Procédé selon la revendication 1, dans lequel les particules irradiées sont irradiées avec une irradiation UV en un ou plusieurs cycle(s) d'irradiation.

7. Substrat revêtu avec une composition de revêtement en poudre du procédé selon la revendication 1.
